# EUROPÄISCHE PATENTSCHRIFT

(11) **EP 4 287 155 B1**
(45) Veröffentlichungstag und Bekanntmachung des Hinweises auf die Patenterteilung: **01.01.2025**
(21) Anmeldenummer: 22176474.9
(22) Anmeldetag: 31.05.2022
(51) Int. Cl.: G08G 1/01, G08G 1/0967, H04W 4/40, H04W 88/04, G08G 1/065

(54) **VERFAHREN ZUR ERFASSUNG EINER VERKEHRSSITUATION IN EINEM GEOGRAPHISCHEN GEBIET DURCH ÜBERMITTELN EINES NACHRICHTENINHALTS, TELEKOMMUNIKATIONSNETZ ODER SYSTEM, VERKEHRSTEILNEHMER, COMPUTERPROGRAMM UND COMPUTERLESBARES MEDIUM**
METHOD FOR DETECTING A TRAFFIC SITUATION IN A GEOGRAPHICAL AREA BY TRANSMITTING THE CONTENT OF A MESSAGE, TELECOMMUNICATION NETWORK OR SYSTEM, TRAFFIC PARTICIPANT, COMPUTER PROGRAM AND COMPUTER READABLE MEDIUM
PROCÉDÉ DE DÉTECTION D'UNE SITUATION DE CIRCULATION DANS UNE ZONE GÉOGRAPHIQUE PAR TRANSMISSION D'UN CONTENU DE MESSAGE, RÉSEAU OU SYSTÈME DE TÉLÉCOMMUNICATION, USAGER DE LA ROUTE, PROGRAMME INFORMATIQUE ET SUPPORT LISIBLE PAR ORDINATEUR

(43) Veröffentlichungstag der Anmeldung: 06.12.2023
(73) Patentinhaber: Deutsche Telekom AG, 53113 Bonn (DE)
(72) Erfinder: SCHMITT, Florian-Leon, 53227 Bonn (DE); SUDHOLT, Frank, 53604 Bad Honnef (DE)
(74) Vertreter: Schwöbel, Thilo K.

(56) Entgegenhaltungen:
- DE-B3- 102011 009 812
- US-A1- 2010 188 265
- US-A1- 2020 009 982
- US-A1- 2020 027 346
- US-A1- 2021 051 198
- US-A1- 2021 306 837

## Beschreibung

### Stand der Technik

Die Erfindung betrifft ein Verfahren zur Erfassung einer Verkehrssituation in einem geographischen Gebiet durch Übermitteln eines Nachrichteninhalts von einem stationären Sender zu einem stationären Empfänger über eine Mehrzahl von mobilen Verkehrsteilnehmern, wobei sowohl der Sender als auch die Mehrzahl von mobilen Verkehrsteilnehmern Broadcast-Nachrichten mit einem Nachrichteninhalt zu senden in der Lage sind und wobei der stationäre Empfänger in der Lage ist, Broadcast-Nachrichten zu empfangen, wobei der Nachrichteninhalt wenigstens einer Broadcast-Nachricht des Senders an wenigstens einen der Mehrzahl von mobilen Verkehrsteilnehmern mittels der wenigstens einen Broadcast-Nachricht mittels einer PC5-Sidelink Funktionalität, insbesondere unter Nutzung der Mode-4-Funktionalität, gesendet wird.

Die Erfindung betrifft des Weiteren ein Telekommunikationsnetz oder ein System zur Erfassung einer Verkehrssituation in einem geographischen Gebiet durch Übermitteln eines Nachrichteninhalts von einem stationären Sender zu einem stationären Empfänger über eine Mehrzahl von mobilen Verkehrsteilnehmern, wobei sowohl der Sender als auch die Mehrzahl von mobilen Verkehrsteilnehmern Broadcast-Nachrichten mit einem Nachrichteninhalt zu senden in der Lage sind, wobei der Nachrichteninhalt wenigstens einer Broadcast-Nachricht des Senders an wenigstens einen der Mehrzahl von mobilen Verkehrsteilnehmern mittels der wenigstens einen Broadcast-Nachricht mittels einer PC5-Sidelink Funktionalität, insbesondere unter Nutzung der Mode-4-Funktionalität, gesendet wird.

Die Erfindung betrifft ferner einen Verkehrsteilnehmer zur Verwendung in einem erfindungsgemäßen Telekommunikationsnetz oder in einem erfindungsgemäßen System.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Bei vorbekannten Telekommunikationsnetzen ist es bereits bekannt, eine Gerät-zu-Gerät-Kommunikation (device-to-device communication) zu verwenden. Dies ist auch der Fall bei der zellularen V2X-Kmmunikation (C-V2X), welche die Möglichkeit zur Verfügung stellt, dass Kommunikationsteilnehmer bzw. Verkehrsteilnehmer Nachrichten authentisch bzw. autorisiert, anonym, sowie direkt (d.h. ohne Einbindung des Mobilfunknetzes, insbesondere über die PC5 Sidelink Funktionalität) in einer begrenzten Umgebung austauschen, insbesondere um Hauptanwendungsfälle wie Verkehrssicherheit, Verkehrsmanagement und Infotainment umsetzen zu können.

Bei vorbekannten Verkehrsflussinformationen und der Erhebung der Basisinformationen, um diese ermitteln zu können, sind Probleme zu lösen, die sich beziehen beispielsweise auf die Aktualität und Genauigkeit der Daten oder Ergebnisse sowie die Kosten des Verfahrens bzgl. des Aufbaus einer Infrastruktur.

Das Dokument DE102011009812 offenbart ein Verfahren zur Übermittlung wenigstens einer den aktuellen Verkehrszustand eines Streckenabschnitts beschreibenden Verkehrsinformation an einen Informationsempfänger, wobei ein erstes Kommunikationsmodul einer Kommunikationseinrichtung eines auf dem Streckenabschnitt befindlichen Kraftfahrzeugs die Verkehrsinformation über eine gezielte Kommunikationsverbindung an den Informationsempfänger überträgt, wobei wobei bei mehreren auf dem Streckenabschnitt fahrenden Kraftfahrzeugen mit zum Senden an den Informationsempfänger ausgebildeter Kommunikationseinrichtung durch Kommunikation, insbesondere Broadcast-Kommunikation, von wenigstens zwei Kraftfahrzeugen auf dem Streckenabschnitt mittels eines zweiten Kommunikationsmoduls der Kommunikationseinrichtung die Zahl der die Verkehrsinformation an den Informationsempfänger sendenden Kraftfahrzeuge reduziert wird, und wobei unter Verwendung eines Kommunikationsprotokolls durch die Kommunikation eine gemeinsame Verkehrsinformation und ein diese Verkehrsinformation an den Informationsempfänger übermittelndes Kraftfahrzeug bestimmt wird, wonach das bestimmte Kraftfahrzeug die bestimmte gemeinsame Verkehrsinformation an den Informationsempfänger übermittelt, sowie ein Kraftfahrzeug.

### Offenbarung der Erfindung

Der Erfindung liegt die Aufgabe zugrunde, ein Verfahren zur Ermittlung des Verkehrsflusses von Fahrzeugen (bzw. Verkehrsteilnehmern) auf einem vordefinierten Straßenabschnitt möglichst einfach, schnell und mit hoher Aktualität und Genauigkeit unter vertretbaren Infrastrukturkosten und unter vertretbarem Kommunikationsaufwand anzugeben, wobei das Übermitteln eines Nachrichteninhalts von Positionen, Geschwindigkeiten, sowie deren Zeitpunkte und Angaben über den Fahrzeugtyp und die maximal mögliche Geschwindigkeit des Fahrzeuges von den Fahrzeugen auf dem Straßenabschnitt während eines kurzen Zeitraums (beispielsweise im 1-stelligen Sekundenbereich) mittels einer Mehrzahl von Broadcast-Nachrichten zur Erfassung möglichst aller Fahrzeuge (bzw. Verkehrsteilnehmer) zwischen Anfangs- und Endpunkt des Straßenabschnittes anzugeben, wobei der (stationäre) Sender am Anfangspunkt des Straßenabschnittes wenigstens eine initiale Broadcast-Nachricht überträgt, wobei der Nachrichteninhalt von dem Sender an eine Mehrzahl von Empfängern (Verkehrsteilnehmer) als Broadcast-Nachricht mittels einer D2D-Funktionalität, device-to-device-Funktionalität oder einer PC5-Sidelink Funktionalität, insbesondere unter Nutzung der Mode-4-Funktionalität, gesendet wird.

Die Aufgabe wird erfindungsgemäß gelöst durch ein Verfahren zur Erfassung einer Verkehrssituation gemäß Anspruch 1.

Es ist dadurch gemäß der vorliegenden Erfindung in vorteilhafter Weise möglich, dass in vergleichsweise einfacher Art und Weise zum einen der vorgegebene Straßenabschnitt effektiv abgedeckt wird (d.h. der Nachrichteninhalt an die relevanten Empfänger innerhalb des geographischen Gebiets übermittelt wird) und zum anderen die Anzahl der hierzu verwendeten bzw. benötigten Nachrichten vergleichsweise klein gehalten werden kann. Bezüglich der Gesamtanzahl der zu versendenden Broadcast Nachrichten einerseits und der Erfassung möglichst vieler Fahrzeuge auf dem Straßenabschnitt andererseits ist jedoch eine Abwägung vorzunehmen, da je mehr Nachrichten versendet werden desto mehr Fahrzeuge auch erfasst werden können, was aber auch zusätzlich von der Gesamtlänge des Straßenabschnitts, den Senderadien und den Fahrzeugdichten auf den Unterabschnitten abhängig ist. Erfindungsgemäß ist es insbesondere möglich, ein Mesh-Verfahren für Broadcast Kettennachrichten mit beweglichen Vehicle Broadcast Sendern zur Benachrichtigung auf einem abgegrenzten Straßenabschnitt mit definierter Fahrtrichtung unter weitgehender Minimierung der Anzahl an notwendigen Broadcast Nachrichten zur Verfügung zu stellen und möglichst viele der Fahrzeuge auf dem Straßenabschnitt, die die Fähigkeiten der Teilnahme an dem Verfahren haben, anzusprechen und ihre benötigten Daten abzurufen und bis zum finalen Empfänger transportieren zu können. Insbesondere ist erfindungsgemäß eine Kommunikation nach der PC5-Sidelink Spezifikation - wie für LTE realisiert - hierzu geeignet. Hinsichtlich des Ziels, möglichst viele Fahrzeuge zu erreichen bzw. einzubinden, kann bzgl. beispielsweise der Zielgrößen mittlere Durchschnittsgeschwindigkeiten für Unterabschnitte oder den Gesamtabschnitt zumindest auf einen einstelligen Prozentsatz bis hin zu einem höheren zweistelligen Prozentsatz an Fahrzeugen verzichten werden; dies folgt daraus, dass, wenn sich beispielhaft etwa 50% der Fahrzeuge, die sich ausreichend gleichmäßig auf dem Abschnitt befinden, flüssig, beispielsweise im Bereich der Richtgeschwindigkeit, bewegen, dann auch die anderen 50% der Fahrzeuge sich entsprechend bewegen.

Erfindungsgemäß ist es somit vorgesehen, dass zwischen dem Sender und dem Empfänger, d.h. im Bereich des geographischen Gebiets, mehrere Verkehrsteilnehmer, welche als Kommunikationsteilnehmer fungieren, derart jeweils zunächst eine Broadcast-Nachricht mit einem bestimmten Nachrichteninhalt (bzw. mehrere Broadcast-Nachrichten mit jeweils einem bestimmten Nachrichteninhalt) empfangen und sodann (zumindest in der Regel) eine weitere Broadcast-Nachricht mit einem weiteren Nachrichteninhalt senden, dass durch den Empfänger zumindest eine Broadcast-Nachricht eines bestimmten Nachrichteninhalts empfangen wird.

Gemäß einer bevorzugten Ausführungsform der vorliegenden Erfindung ist es bevorzugt vorgesehen, dass das geographische Gebiet einem Abschnitt - insbesondere einem Streckenabschnitt, eines Verkehrsweges, insbesondere einer Straße, etwa einer Schnellstraße oder Autobahn - entspricht oder das geographische Gebiet den entsprechenden Bereich des Abschnitts des Verkehrsweges definiert, wobei insbesondere die Gebietsinformation eine Richtungsinformation umfasst und/oder wobei die Gebietsinformation eine Positionsinformation des stationären Empfängers umfasst.

Hierdurch ist es gemäß einer solchen Ausführungsform der Erfindung vorteilhaft möglich das erfindungsgemäße Verfahren einfach und effizient durchzuführen und eine Erfassung der Verkehrssituation in einem geographischen Gebiet durchzuführen.

Erfindungsgemäß ist es vorgesehen, dass die Positionsinformation der momentanen Position des betrachteten Verkehrsteilnehmers eine Positionsinformation auf dem Streckenabschnitt des Verkehrsweges ist und dass die Zusatzinformation wenigstens eine der nachfolgenden Informationen umfasst:
-- eine Fahrzeugtypinformation,
-- eine Fahrzeugkategorieinformation, insbesondere, ob es sich um einen Personenkraftwagen oder um einen Lastkraftwagen handelt, ferner bevorzugt, ob es sich um einen Sportwagen oder um eine Limousine oder um einen Kombinationskraftwagen oder um ein Sports Utility Vehicle oder um einen Lastkraftwagen mit Anhänger handelt,
-- eine Information zur maximalen Geschwindigkeit des Fahrzeugs,
-- eine das Fahrzeug identifizierende, insbesondere das Fahrzeug pseudonym identifizierende Information.

Hierdurch ist es gemäß einer solchen Ausführungsform der Erfindung vorteilhaft möglich, dass lediglich Verkehrsteilnehmer einbezogen werden, welche sich tatsächlich auf dem betrachteten Streckenabschnitt des Verkehrsweges befinden bzw. es ist vorteilhaft möglich, dass dadurch, dass die Zusatzinformation eine Fahrzeugtypinformation und/oder eine Fahrzeugkategorieinformation und/oder eine Information zur maximalen Geschwindigkeit des Fahrzeugs und/oder eine das Fahrzeug identifizierende, insbesondere pseudonym identifizierende Information umfasst, so dass die Erfassung der Verkehrssituation in dem geographischen Gebiet effizient und vergleichsweise schnell durchführbar ist.

Gemäß einer weiteren Ausführungsform der vorliegenden Erfindung ist es bevorzugt vorgesehen, dass der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation sich fortbewegend erkannt wird.

Hierdurch ist es gemäß einer solchen Ausführungsform der Erfindung vorteilhaft möglich das erfindungsgemäße Verfahren besonders einfach und effizient durchzuführen.

Gemäß einer weiteren Ausführungsform der vorliegenden Erfindung ist es bevorzugt vorgesehen, dass der betrachtete Verkehrsteilnehmer die wenigstens eine weitere Broadcast-Nachricht frühestens nach Ablauf eines Zeitintervalls nach dem im ersten Schritt erfolgenden Empfang der wenigstens einen Broadcast-Nachricht sendet, wobei das Zeitintervall der Aggregationszeitinformation entspricht oder als Teil der Aggregationszeitinformation definiert ist,
wobei insbesondere die durch den betrachteten Verkehrsteilnehmer empfangene wenigstens eine Broadcast-Nachricht
   -- eine vom stationären Sender gesendete Broadcast-Nachricht ist oder
   -- eine von einem anderen Verkehrsteilnehmer gesendete weitere Broadcast-Nachricht ist,
wobei das Verfahren insbesondere als Teil des zweiten Schritts aufweist:
   -- der betrachtete Verkehrsteilnehmer empfängt innerhalb des Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und
   -- der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst,
wobei insbesondere die zusätzlichen Ergänzungsinformationen derart bereinigt werden, dass kein Verkehrsteilnehmer doppelt berücksichtigt ist.

Hierdurch ist es gemäß einer solchen Ausführungsform der Erfindung vorteilhaft möglich das erfindungsgemäße Verfahren besonders einfach und effizient durchzuführen.

Gemäß einer weiteren Ausführungsform der vorliegenden Erfindung ist es bevorzugt vorgesehen, dass - in einem dritten Schritt sowie in Abhängigkeit der Wiederholungsinformation - der zweite Schritt durch den betrachteten Verkehrsteilnehmer wiederholt wird, wobei der betrachtete Verkehrsteilnehmer in Wiederholung des zweiten Schritts eine erneute weitere Broadcast-Nachricht frühestens nach Ablauf eines erneuten Zeitintervalls nach der zuvor erfolgten Durchführung des zweiten Schritts sendet, wobei das erneute Zeitintervall der Aggregationszeitinformation entspricht oder als Teil der Aggregationszeitinformation definiert ist, wobei das Verfahren insbesondere als Teil des dritten Schritts aufweist:
-- der betrachtete Verkehrsteilnehmer empfängt innerhalb des erneuten Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und
-- der betrachtete Verkehrsteilnehmer sendet die erneute weitere Broadcast-Nachricht derart, dass die erneute weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des erneuten Zeitintervalls von den zusätzlichen anderen Verkehrsteilnehmern empfangenen zusätzlichen weiteren Broadcast-Nachrichten umfasst,

wobei insbesondere die zusätzlichen Ergänzungsinformationen derart bereinigt werden, dass kein Verkehrsteilnehmer doppelt berücksichtigt ist,
wobei insbesondere der dritte Schritt in Abhängigkeit der Wiederholungsinformation mehrfach durchgeführt wird.

Gemäß einer weiteren Ausführungsform der vorliegenden Erfindung ist es bevorzugt vorgesehen, dass der betrachtete Verkehrsteilnehmer bezüglich der weiteren Broadcast-Nachricht und bezüglich der wenigstens einen erneuten weiteren Broadcast-Nachricht die gleiche Ergänzungsinformation verwendet, insbesondere hinsichtlich der Positionsinformation, der Geschwindigkeitsinformation, der Zeitstempelinformation und der Zusatzinformation.

Gemäß einer weiteren Ausführungsform der vorliegenden Erfindung ist es bevorzugt vorgesehen, dass der Nachrichteninhalt der wenigstens einen Broadcast-Nachricht wenigstens eine der nachfolgenden Informationen umfasst:
-- Verkehrsflussinformationen betreffend wenigstens ein weiteres geographisches Gebiet, insbesondere ein Abschnitt, insbesondere ein Streckenabschnitt, eines Verkehrsweges, insbesondere einer Straße, welcher in Fahrtrichtung der Verkehrsteilnehmer dem geographischen Gebiet nachfolgt,
-- Verkehrsflussinformationen betreffend mehrere alternativ benutzbare Wege welche in Fahrtrichtung der Verkehrsteilnehmer dem geographischen Gebiet nachfolgen.

Des Weiteren wird die Aufgabe gelöst durch ein Telekommunikationsnetz oder ein System zur Erfassung einer Verkehrssituation nach Anspruch 9.

Es ist dadurch gemäß der vorliegenden Erfindung in vorteilhafter Weise möglich, ein zum erfindungsgemäßen Verfahren korrespondierendes erfindungsgemäßes Telekommunikationsnetz oder System bereitzustellen.

Die Aufgabe wird ferner gelöst durch einen Verkehrsteilnehmer, insbesondere mit Sender- und Empfängerfunktionalität, zur Verwendung in einem erfindungsgemäßen Telekommunikationsnetz oder System.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einem Netzknoten in Form eines Senders und/oder Empfängers und/oder eines Kommunikationsteilnehmers, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einem Netzknoten in Form eines Senders und/oder Empfängers und/oder eines Kommunikationsteilnehmers, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

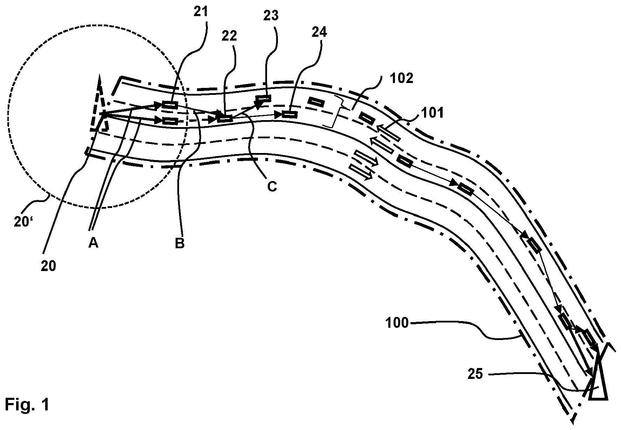

- **Figur 1**: zeigt eine schematische Situation einer Mehrzahl von Verkehrsteilnehmern (die als Kommunikationsteilnehmer fungieren) innerhalb eines geographischen Gebiets zur Übertragung eines Nachrichteninhalts von einem stationären Sender zu einem stationären Empfänger über eine Mehrzahl von mobilen Verkehrsteilnehmern.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

In Figur 1 ist schematisch eine Situation einer Mehrzahl von (in aller Regel mobilen) Verkehrsteilnehmern 21, 22, 23, 24 (die als Kommunikationsteilnehmer fungieren) innerhalb eines geographischen Gebiets 100 zur Übertragung eines Nachrichteninhalts von einem stationären Sender 20 zu einem stationären Empfänger 25 über eine Mehrzahl von mobilen Verkehrsteilnehmern 21, 22, 23, 24 dargestellt. In Figur 1 sind mehrere Verkehrsteilnehmer dargestellt, wobei jedoch lediglich ein erster Verkehrsteilnehmer 21, ein zweiter Verkehrsteilnehmer 22, ein dritter Verkehrsteilnehmer 23 und ein vierter Verkehrsteilnehmer 24 mittels Bezugszeichen benannt ist. Hierbei ist sowohl der Sender 20 als auch die Mehrzahl von mobilen Verkehrsteilnehmern 21, 22, 23, 24 in der Lage, Broadcast-Nachrichten mit einem Nachrichteninhalt zu senden. Der stationäre Empfänger 25 ist jedenfalls (zumindest) in der Lage, Broadcast-Nachrichten zu empfangen. Der Nachrichteninhalt wenigstens einer Broadcast-Nachricht des Senders 20 wird erfindungsgemäß an wenigstens einen Verkehrsteilnehmer 21, 22, 23, 24 der Mehrzahl von mobilen Verkehrsteilnehmern 21, 22, 23, 24 mittels der wenigstens einen Broadcast-Nachricht mittels einer PC5-Sidelink Funktionalität, insbesondere unter Nutzung der Mode-4-Funktionalität, gesendet. Der unmittelbare Empfang einer betrachteten, vom Sender 20 ausgesandten Broadcast-Nachricht (und damit der Empfang ihres Nachrichteninhalts) durch einen Verkehrsteilnehmer 21, 22, 23, 24 (oder eine Mehrzahl solcher Verkehrsteilnehmer 21, 22, 23, 24) setzt voraus, dass sich der Verkehrsteilnehmer bzw. die Verkehrsteilnehmer 21, 22, 23, 24 innerhalb eines Sendegebiets 20' bzw. Funkabdeckungsbereichs 20' des Senders 20 befindet/befinden. Der Funkabdeckungsbereich 20' kann somit als derjenige räumliche Bereich (in Figur 1 beispielhaft um den Sender 20 herum) angesehen werden, innerhalb dessen von diesem Kommunikationsteilnehmer (d.h. vorliegend vom Sender 20) ausgesandte bzw. abgestrahlte Funksignale, insbesondere umfassend eine oder mehrere Broadcast-Nachrichten, noch eine Signalstärke bzw. Signaleigenschaften derart aufweisen, dass die anderen Verkehrsteilnehmer 21, 22, 23, 24 als Kommunikationsteilnehmer diese empfangen und verarbeiten, d.h. ggf. prozessieren und/oder entschlüsseln, können. Der ungefähre Radius des (im Wesentlichen kreisförmig gedachten) Funkabdeckungsbereichs 20' liegt typischerweise im Bereich zwischen ca. 50 m und mehreren hundert Metern, beispielsweise 200 m, 300 m, 400 m oder 500 m.

Erfindungsgemäß ist es vorgesehen, dass - nach dem Empfang einer betrachteten (vom Sender 20 ausgehenden) Broadcast-Nachricht durch beispielsweise den ersten Verkehrsteilnehmer 21 (d.h. in seiner Eigenschaft als Kommunikationsteilnehmer bzw. als Teilnehmer des erfindungsgemäßen Verfahrensablaufs) - dieser erste Verkehrsteilnehmer 21 wiederum als Sender fungiert und eine weitere Broadcast-Nachricht (insbesondere mittels einer PC5-Sidelink Funktionalität, insbesondere unter Nutzung der Mode-4-Funktionalität) sendet, wobei auch hierfür ein (mit dem des Senders 20 vergleichbarer) Senderadius und ein für den ersten Verkehrsteilnehmer 21 zu betrachtenden Funkabdeckungsbereich existiert bzw. anzunehmen ist, der jedoch der Einfachheit halber in Figur 1 nicht eigens gezeichnet und benannt ist; Gleiches gilt für die weiteren Verkehrsteilnehmer, insbesondere den zweiten, dritten und vierten Verkehrsteilnehmer 22, 23, 24.

Erfindungsgemäß ist es somit vorgesehen, dass zwischen dem Sender 20 und dem Empfänger 25, d.h. im Bereich des geographischen Gebiets 100, mehrere Verkehrsteilnehmer 21, 22, 23, 24, welche als Kommunikationsteilnehmer fungieren, derart jeweils zunächst eine Broadcast-Nachricht mit einem bestimmten Nachrichteninhalt (bzw. mehrere Broadcast-Nachrichten mit jeweils einem bestimmten Nachrichteninhalt) empfangen und sodann (zumindest in der Regel) eine weitere Broadcast-Nachricht mit einem weiteren Nachrichteninhalt senden, dass durch den Empfänger 25 zumindest eine Broadcast-Nachricht eines bestimmten Nachrichteninhalts empfangen wird. Dies ist in Figur 1 schematisch mittels zweier Pfeile A dargestellt, welche das Aussenden einer initialen Broadcast-Nachricht (d.h. quasi zum Zeitpunkt t = 0) vom Sender 20 bezeichnen sollen sowie deren Empfang durch zwei Verkehrsteilnehmer, darunter auch den ersten Verkehrsteilnehmer 21. Mittels eines Pfeils B ist in Figur 1 angedeutet, dass der erste Verkehrsteilnehmer 21 zu einem späteren Zeitpunkt (t = dt) eine erste weitere Broadcast-Nachricht aussendet, welche vom zweiten Verkehrsteilnehmer 22 (sowie ggf. weiteren Verkehrsteilnehmern, falls sich diese im entsprechenden Empfangsbereich befinden) empfangen wird. Mittels eines Pfeils C ist in Figur 1 angedeutet, dass der zweite Verkehrsteilnehmer 22 zu einem wiederum späteren Zeitpunkt (t = 2*dt) eine zweite weitere Broadcast-Nachricht aussendet, welche vom dritten Verkehrsteilnehmer 23 (sowie ggf. weiteren Verkehrsteilnehmern, falls sich diese im entsprechenden Empfangsbereich befinden) empfangen wird. Da erfindungsgemäß jede der weiteren Broadcast-Nachrichten zumindest Teile des initialen Nachrichteninhalts umfasst, gelangen zumindest diese Teile des initialen Nachrichteninhalts nach einer gewissen Anzahl weiterer solcher Nachrichtenempfangs- und nachfolgender Nachrichtensendeereignisse analog zu einer Nachrichtenkette schlussendlich zum Empfänger 25, wobei die Ausbreitungsrichtung von zumindest Teilen des initialen Nachrichteninhalts (bzw. die Fortpflanzungsrichtung der Nachrichten) erfindungsgemäß insbesondere derart vorgesehen ist, dass diese entgegen der Fahrtrichtung 101 der Verkehrsteilnehmer gewählt ist.

Somit ergibt sich gemäß der vorliegenden Erfindung, dass die Durchführung des Verfahrens zur Erfassung der Verkehrssituation hinsichtlich eines (letztlich beliebigen) betrachteten Verkehrsteilnehmers (entlang der Kette beteiligter Verkehrsteilnehmer) die nachfolgenden Schritte erfordert:
-- in einem ersten Schritt empfängt der betrachtete Verkehrsteilnehmer wenigstens eine Broadcast-Nachricht (d.h. beispielsweise empfängt der erste Verkehrsteilnehmer 21 die initiale Broadcast-Nachricht des Senders 20 bzw. es empfängt der zweite Verkehrsteilnehmer 22 die erste weitere Broadcast-Nachricht vom ersten Verkehrsteilnehmer 21 und so fort), wobei der Nachrichteninhalt der wenigstens einen Broadcast-Nachricht wenigstens
   -- eine Nachrichtenidentifikationsinformation,
   -- eine Gebietsinformation zur Definition des geographischen Gebiets 100
   -- eine Wiederholungsinformation und
   -- eine Aggregationszeitinformation
   umfasst,
-- in einem nachfolgenden zweiten Schritt sendet der betrachtete Verkehrsteilnehmer wenigstens eine weitere Broadcast-Nachricht (d.h. beispielsweise sendet der erste Verkehrsteilnehmer 21 die die erste weitere Broadcast-Nachricht bzw. es sendet der zweite Verkehrsteilnehmer 22 die zweite weitere Broadcast-Nachricht und so fort), wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:
   -- eine Positionsinformation der momentanen Position des betrachteten Verkehrsteilnehmers,
   -- eine Geschwindigkeitsinformation des betrachteten Verkehrsteilnehmers
   -- eine momentane Zeitstempelinformation und
   -- eine Zusatzinformation
umfasst.

Es ist somit durch das erfindungsgemäße Verfahren möglich, Daten für aktuelle Verkehrsflüsse von Straßenabschnitten mittels einer Mehrzahl von Broadcast-Nachrichten-Ketten (zwischen dem Sender 20 und dem Empfänger 25 über mehrere Verkehrsteilnehmer 21, 22, 23, 24) zu übermitteln, wobei es erfindungsgemäß insbesondere vorgesehen ist, die Ausbreitungsrichtung dieser Nachrichtenübermittlung (bzw. Broadcast-Ketten-Nachrichten) entgegen der erlaubten Verkehrsrichtung (bzw. entgegen der Verkehrsflussrichtung, Bezugszeichen 101 in Figur 1) vorzusehen. Somit realisiert die Erfindung ein Verfahren zum Ermitteln der aktuellen Verkehrsflüsse von Straßenabschnitten mittels einer Mehrzahl von Broadcast-Nachrichten-Ketten. Insbesondere ist es vorgesehen, dass der Sender 20 als ein autorisierter Sender (z.B. am Funkmast eines Netzbetreibers und am Ausgangspunkt des geographischen Gebiets, etwa eines Straßenabschnitts) periodisch eine initiale spezielle Broadcast-Nachricht aussendet, wobei der Nachrichteninhalt von dem Sender 20 an eine Mehrzahl von Empfängern (Verkehrsteilnehmer 21, 22, 23, 24) als Broadcast-Nachricht mittels einer D2D-Funktionalität, device-to-device-Funktionalität oder einer PC5-Sidelink Funktionalität, insbesondere unter Nutzung der Mode-4-Funktionalität, gesendet wird. Die Nachricht wird insbesondere nur von Fahrzeugen (Verkehrsteilnehmer bzw. Empfangsgeräte) auf dem Straßenabschnitt des geographischen Gebiets 100 (definiert in der initialen Broadcast Nachricht) sowie mit der vorgegebenen Fahrtrichtung 101 durch eigene Informationen (insbesondere Position, Geschwindigkeit, Zeitstempel und FZG Typ) angereichert und erneut als (auch von zukünftigen Empfängern anzureichernde) Broadcast Nachricht versendet, wodurch es mehrere Ketten von Broadcast Nachrichten geben kann (und in der Regel auch geben wird), die beim Erreichen des Endpunktes des Straßenabschnittes vom Empfänger 25 (bzw. vom finalen Empfänger), z.B. eine spezielle Empfangseinheit am Funkmast eines Netzbetreibers, empfangen werden und danach zu aktuellen Verkehrsflussinformationen des Straßenabschnitts verarbeitet werden.

Jeweils eine solche Kette von Broadcast-Nachrichten (welche über bzw. durch das geographische Gebiet 100 bis zum Empfänger 25 ,laufen`) wird somit durch eine initiale spezielle Broadcast-Nachricht ausgelöst bzw. begonnen, wobei solche initialen speziellen Broadcast-Nachricht vom Sender 20 erfindungsgemäß insbesondere periodisch (beispielsweise alle 100, 200, 300, 400, 500, 600, 700 oder 800 Sekunden oder auch alle 2, 3, 4, 5, 8, 10, 12, 15, 18, 20, 25 oder 30 Minuten) wiederholt werden (insbesondere unter Nutzung einer jeweils anderen, beispielsweise hochgezählten, Nachrichtenidentifikationsinformation).

Neben einer solchen wiederholten, insbesondere periodisch oder regelmäßig periodisch wiederholten, Generierung von Nachrichtenketten vom Sender 20 zum Empfänger 25 im geographischen Gebiet 100 ist es gemäß Ausführungsvarianten der Erfindung auch vorgesehen, dass - in einem dritten Schritt des Verfahrens sowie in Abhängigkeit der Wiederholungsinformation - der zweite Schritt durch den betrachteten Verkehrsteilnehmer wiederholt wird. Hierbei sendet der betrachtete Verkehrsteilnehmer in Wiederholung des zweiten Schritts eine erneute weitere Broadcast-Nachricht frühestens nach Ablauf eines erneuten Zeitintervalls nach der zuvor erfolgten Durchführung des zweiten Schritts. Das erneute Zeitintervall entspricht insbesondere der Aggregationszeitinformation und/oder ist als Teil der Aggregationszeitinformation definiert. Hierbei empfängt der betrachtete Verkehrsteilnehmer innerhalb des erneuten Zeitintervalls insbesondere zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen. Der betrachtete Verkehrsteilnehmer sendet nun die erneute weitere Broadcast-Nachricht derart, dass die erneute weitere Broadcast-Nachricht als ihren Nachrichteninhalt den Nachrichteninhalt der wenigstens einen (durch denen betrachteten Verkehrsteilnehmer empfangenen) Broadcast-Nachricht umfasst und als Teil ihrer Ergänzungsinformationen die zusätzlichen Ergänzungsinformationen der innerhalb des erneuten Zeitintervalls von den zusätzlichen anderen Verkehrsteilnehmern empfangenen zusätzlichen weiteren Broadcast-Nachrichten umfasst. Insbesondere werden erfindungsgemäß hierbei die zusätzlichen Ergänzungsinformationen derart bereinigt, dass kein Verkehrsteilnehmer doppelt berücksichtigt ist. Die Wiederholungsinformation gibt hierbei insbesondere an bzw. indiziert, ob überhaupt der dritte Schritt durchgeführt wird (d.h. der zweite Schritt wiederholt wird) und auch, ob der dritte Schritt ebenfalls wiederholt wird (d.h. letztlich der zweite Schritt mehr als zweimal durchgeführt wird).

Insbesondere ist es erfindungsgemäß vorgesehen, dass der betrachtete Verkehrsteilnehmer bezüglich der weiteren Broadcast-Nachricht und bezüglich der wenigstens einen erneuten weiteren Broadcast-Nachricht die gleiche Ergänzungsinformation verwendet, insbesondere hinsichtlich der Positionsinformation, der Geschwindigkeitsinformation, der Zeitstempelinformation und der Zusatzinformation. Übertragen auf alle Verkehrsteilnehmer gilt somit, dass innerhalb einer Kette von Broadcast-Nachrichten (d.h. ausgelöst oder initiiert durch eine spezielle (bzw. betrachtete) initiale Broadcast-Nachricht des Senders 20 und aufweisend eine bestimmte (bzw. betrachtete) Nachrichtenidentifikationsinformation alle Verkehrsteilnehmer 21, 22, 23, 24 jeweils keine Änderungen der übermittelten Geschwindigkeitsinformationen, Zeitstempelinformationen und Zusatzinformationen vornehmen, obwohl sich beispielsweise die Position eines Verkehrsteilnehmers nach Ablauf des erneuten Zeitintervalls geändert haben wird.

Erfindungsgemäß können gemäß weiterer Ausführungsvarianten insbesondere auch Unterabschnitte des Straßenabschnittes (bzw. des geographischen Gebiets 100) weiter differenziert werden, da alle enthaltenen Datensätze in den Broadcast Nachrichten mit Positionen und Zeitstempeln versehen sind. Ein jeder Empfänger bzw. Verkehrsteilnehmer 21, 22, 23, 24 auf dem Straßenabschnitt wird dann die Verkehrsinformationen der Fahrzeuge zwischen ihm und dem initialen Sender 20 erhalten und als aktuellste Verkehrs-Info (V-Info) für seinen Weg bis zum initialen Sender (d.h. bis zum Anfang des betrachteten Straßenabschnitts bzw. geographischen Gebiets 100) nutzen können.

Der finale Empfänger 25 nutzt die aggregierten Informationen, um sie hochfrequent als Broadcast an alle Verkehrsteilnehmer auszustrahlen, sodass jedes vorbeifahrende Fahrzeug die Verkehrsinformationen des Abschnittes vor ihm erhält. Die Nachricht enthält auch noch den Zeitstempel der letzten aggregierten Broadcast Nachricht, die einen Zugewinn an Informationen zur Verkehrssituation auf dem betrachteten Straßenabschnitt bzw. geographischen Gebiet geliefert hatte.

Erfindungsgemäß ist es gegenüber vorbekannten Telekommunikationsnetzen, bei denen bereits eine Gerät-zu-Gerät-Kommunikation (device-to-device communication) verwendet wird und bei denen insbesondere das Problem einer sehr großen bzw. zu großen Anzahl von Nachrichten auftritt, wenn Nachrichteninhalte in Form von Kettennachrichten übertragen werden sollen und möglichst alle (oder je nach Anwendungsfall ausreichend viele) Kommunikationseinheiten eines vorgegebenen Abdeckungsbereiches ihren spezifischen Beitrag liefern sollen, vorteilhaft möglich, dass eine gute Abwägung zwischen Kommunikationsaufwand und dem durch die Kommunikation zu erzielenden Nutzen realisierbar ist, welche insbesondere durch die speziellen Regeln im Prozessablauf und der gegenseitigen Abhängigkeiten von Nachrichtensendungen je Kommunikationseinheit (bzw. Verkehrsteilnehmer) und der Anzahl an aggregierten Kommunikationseinheiten mit ihren individuellen Fahrzeuginformationen (insbesondere Position, Geschwindigkeit, etc.) bis zum Zielpunkt.

Gemäß bevorzugter Ausführungsformen ist es erfindungsgemäß insbesondere vorgesehen, dass das geographische Gebiet 100 einem Abschnitt, insbesondere einem Streckenabschnitt, eines Verkehrsweges, insbesondere einer Straße, etwa einer Schnellstraße oder Autobahn, entspricht oder das geographische Gebiet 100 den entsprechenden Bereich des Abschnitts des Verkehrsweges definiert, wobei insbesondere die Gebietsinformation eine Richtungsinformation 101 umfasst und/oder wobei die Gebietsinformation eine Positionsinformation des stationären Empfängers 25 umfasst.

Die Positionsinformation der momentanen Position des betrachteten Verkehrsteilnehmers ist bevorzugt eine Positionsinformation auf dem Streckenabschnitt des Verkehrsweges, d.h. mittels dieser Bedingung ist es möglich, die Anzahl der gemäß des erfindungsgemäßen Verfahrens gesendeten Broadcast-Nachricht zu begrenzen auf solche Fälle, bei denen der betrachtete Verkehrsteilnehmer als im geographischen Gebiet 100 (bzw. auf dem betrachteten Streckenabschnitt) befindlich angesehen bzw. erkannt wird.

Erfindungsgemäß umfasst die Zusatzinformation wenigstens eine der Informationen: Fahrzeugtypinformation, Fahrzeugkategorieinformation, Information zur maximalen Geschwindigkeit des Fahrzeugs, eine das Fahrzeug identifizierende, insbesondere das Fahrzeug pseudonym identifizierende Information.

Ferner kann ebenfalls die Anzahl der gemäß des erfindungsgemäßen Verfahrens gesendeten Broadcast-Nachricht dadurch begrenzt werden, dass der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets 100 erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation 101 sich fortbewegend erkannt wird.

Erfindungsgemäß ist es vorgesehen, dass der betrachtete Verkehrsteilnehmer die wenigstens eine weitere Broadcast-Nachricht frühestens nach Ablauf eines Zeitintervalls, dt, nach dem im ersten Schritt erfolgenden Empfang der wenigstens einen Broadcast-Nachricht sendet, wobei das Zeitintervall, dt, der Aggregationszeitinformation entspricht oder als Teil der Aggregationszeitinformation definiert ist.

Insbesondere als Teil des zweiten Schritts sowie innerhalb des Zeitintervalls empfängt der betrachtete Verkehrsteilnehmer insbesondere zusätzliche weitere Broadcast-Nachrichten von zusätzlichen anderen Verkehrsteilnehmern (vgl. etwa den gestrichelt gezeichneten Pfeil, welcher zum zweiten Verkehrsteilnehmer 22 in Figur 1 weist), wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und (insbesondere ebenfalls als Teil des zweiten Schritts) der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst,
wobei insbesondere die zusätzlichen Ergänzungsinformationen derart bereinigt werden, dass kein Verkehrsteilnehmer doppelt berücksichtigt ist.

Erfindungsgemäß ist es somit vorgesehen, dass die vom Sender 20 ausgesandte initiale Nachricht den Straßenabschnitt 100 und die Ausbreitungsrichtung der Nachrichtenketten auf dem Abschnitt eindeutig beschreibt. Danach wird jeder Empfänger, der eine solche Nachricht erhält und sich in der richtigen Richtung 101 auf dem Abschnitt befindet (bewegt oder steht oder in einer Spur 102 mit richtiger Richtung sich befindet) prüfen, ob er diese Nachricht mit insbesondere seiner aktuellen Position, Geschwindigkeit, Zeitmarke, Fahrzeugtyp und maximal mögliche Geschwindigkeit, d.h. mit der Ergänzungsinformation, anreichern muss und diese angereicherte Nachricht auch unverzüglich als Broadcast-Nachricht übertragen soll. Die Regeln zu dieser Prüfung reduziert die Anzahl an Broadcast Nachrichten gemäß der vorliegenden Erfindung erheblich. Das Fahrzeug wird auch die Vereinigung (merging) von mehreren während eines definierten kurzen Zeitraums erhaltenen Broadcast Nachrichten mit seinen eigenen Daten prüfen und das Ergebnis dann als Broadcast Nachricht versenden. Dieser Vorgang des Empfangens, Bewertens, Anreicherns und Versendens wird von Fahrzeug zu Fahrzeug entlang des Straßenabschnittes vorgenommen, bis die spezielle Empfangsstation 25 am Ende des Abschnittes 100 die angereicherten Broadcast Nachrichten inklusive des letzten Fahrzeuges auf dem Abschnitt empfängt. Damit liegen die Basisdaten für eine Ermittlung des Verkehrsflusses auf dem gesamten Straßenabschnitt und für Unterabschnitte in der Empfangsstation am Ende des Abschnittes vor, sobald die Ketten-Nachrichten in der geeigneten Welle die Empfangsstation erreicht haben. Fällt die Ankunft aller Broadcast Wellen zu einer initialen Nachricht des Anfangspunktes gehörend am finalen Empfangspunkt aus, so hat es unterwegs eine zu große Lücke zwischen benachbarten Fahrzeugen gegeben, wodurch die Kommunikation i.d.R. dauerhaft für alle Wellen, die durch diese initiale Nachricht ausgelöst wurden, unterbrochen ist. Dieses liegt daran, dass eine solche Lücke i.d.R. für alle Wellen bestehen bleiben wird, da sich eine solche Lücke in dem kurzen Zeitraum in dem alle Wellen erfolgen i.d.R. nicht ausreichend schließen wird, da die Fahrzeuge dazu sich nicht schnell genug (relativ zu einander) bewegen. Dieses ist aber in der Regel nicht kritisch, da die nächste initiale Broadcast Nachricht des initialen Senders z.B. periodisch in Abständen gestartet werden kann, wobei die zeitlichen Abstände dann nicht zu kurz und somit ausreichend lang sein können um Lücken (insbesondere durch Relativbewegungen von Fahrzeugen) schließen lassen zu können. Außerdem kann die ausbleibende Ankunft solcher Broadcast Wellen zu einer bestimmten initialen Nachricht auch dahingehend interpretiert werden, dass es mindestens eine große räumliche Fahrzeuglücke geben muss und, wenn die Gesamtlänge des Straßenabschnitts nicht zu groß gewählt wurde, dieses somit auf einen eher geringen Verkehr schließen lässt. Dennoch ist es so, dass auch eine vom Fahrzeug auf dem Straßenabschnitt empfangene nicht-finale Nachricht einer Kette für das empfangende Fahrzeug Basisdaten für eine eigenständige Ermittlung des Verkehrsflusses seiner Reststrecke (Reststück) zum Ziel umfasst.

Mit den Parametern Fahrzeugtypinformation und maximal möglicher Geschwindigkeit in den Broadcast Nachrichten nach der initialen Broadcast Nachricht wird das Ziel, Verkehrsfluss-Information zu erhalten wesentlich verbessert, da damit die Daten getrennt werden können nach der Fähigkeit der Fahrzeuge sich schnell fortzubewegen; beispielsweise könnte ein PKW-Fahrer mit einer schnellen Limousine Verkehrsfluss-Informationen, die von vielen LKWs stammen, nicht gut gebrauchen, da ein PKW in der Regel anders gefahren wird als ein LKW; es ist somit beispielsweise bevorzugt, die LKW-Daten in Verkehrsfluss-Informationen nicht zu berücksichtigen. Solche Trennungen sind mittels der Fahrzeugtypinformation und der maximal möglichen Geschwindigkeit in einfacher Weise möglich indem beispielsweise lediglich nur der entsprechende Teil der Basisdaten verwendet wird.

Gemäß der vorliegenden Erfindung ist es vorgesehen, dass zum Übermitteln eines Nachrichteninhalts eine Mehrzahl von Broadcast-Nachrichten verwendet werden. Der Nachrichteninhalt soll hierdurch Fahrtrichtungsorientiert entgegen der Fahrtrichtung eines Straßenabschnitts verteilt werden. Ein Sender 20 überträgt wenigstens eine initiale Broadcast-Nachricht (mit dem initialen Nachrichteninhalt) an eine Mehrzahl von Empfängern als Broadcast-Nachricht. Dies erfolgt erfindungsgemäß mittels einer D2D-Funktionalität, device-to-device-Funktionalität oder mittels einer PC5-Sidelink Funktionalität, insbesondere unter Nutzung der Mode-4-Funktionalität. Der Sender weist hierbei ein Funkabdeckungsgebiet auf, innerhalb dessen ein Empfang von gesendeten Broadcast-Nachrichten durch dort befindliche Empfänger möglich ist. Erfindungsgemäß soll der Straßenabschnitt möglichst effektiv abgedeckt werden, wobei hierfür in einem ersten Schritt der Sender die initiale Broadcast-Nachricht umfassend den Nachrichteninhalt und eine initiale Zusatzinformation sendet und ein erster Empfänger (bzw. erster Verkehrsteilnehmer 21) die initiale Broadcast-Nachricht empfängt. In einem nachfolgenden zweiten Schritt senden die jeweiligen Empfänger - als weitere Sender - jeweils weitere Broadcast-Nachrichten, wobei die weiteren Broadcast-Nachrichten den Nachrichteninhalt und jeweils weitere Zusatzinformationen zur Verkehrssituation des Straßenabschnitts umfassen, nämlich ihre aktuelle eigene Position auf dem Straßenabschnitt, ihre aktuelle Geschwindigkeit und die Zeitmarke sowie Fahrzeugtyp und maximal mögliche Geschwindigkeit. Diese Vorgehensweise endet mit dem Empfang der letzten Kettennachrichten im Umkreis eines definierten Begrenzungspunkt des Straßenabschnittes. Der Standpunkt des finalen Empfängers 25 sollte möglichst nah am Begrenzungspunkt des Straßenabschnitts gelegen sein

Erfindungsgemäß ist insbesondere bevorzugt vorgesehen, dass die Empfangssensitivität des finalen Empfängers 25 möglichst hoch ist, insbesondere auch höher als die der Fahrzeuge bzw. Verkehrsteilnehmer 21, 22, 23, 24. Das gleiche gilt auch für die Sendestärke des Senders 20 der initialen Nachricht. Darüber hinaus kann es bevorzugt auch vorgesehen sein, dass ein aktuelles Fahrzeug in kritischer Nähe (z.B. 500m aber seine aktuelle Sendestärke beträgt nur 400m) des finalen Empfängers 25 seine Sendestärke gezielt erhöht (hier auf >500m), um eine eventuell vorliegende zu große Fahrzeuglücke vor dem finalen Empfänger 25 zu umgehen und den finalen Empfänger 25 direkt und nicht über potentiell hinter ihm fahrende Fahrzeuge zu erreichen.

Beim erfindungsgemäßen Verfahren wird somit erreicht, dass der Nachrichteninhalt für den Straßenabschnitt mittels Broadcast-Nachrichten verteilt wird. Zur Durchführung des Broadcast Verfahrens kann beispielsweise die gemäß 3GPP in Mobilfunknetzen spezifizierte PC5 Broadcast Kommunikation genutzt werden. Ein Mobilfunknetz (genauer gesagt dessen Basisstationen bzw. Antennenstandorte) wird erfindungsgemäß nicht unbedingt benötigt. Dadurch kann das erfindungsgemäße Verfahren auch außerhalb erdgebundener Positionen oder außerhalb der Reichweite von Mobilfunknetzen genutzt werden. Die V2V PC5 Spezifikation (vehicle-to-vehicle Kommunikation) ist bzw. wird für LTE bzw. 5G spezifiziert, um insbesondere zwischen Endgeräten mit Hilfe eines Sendemasts kommunizieren zu können; erfindungsgemäß wird hiervon jedoch lediglich die PC5-Sidelink Funktionalität für Endgerät zu Endgerät Kommunikation ohne Unterstützung eines Sendemasts genutzt.

Die direkte V2V Kommunikation über die PC5-Schnittstelle (Mode 4 ohne Nutzung des Mobilfunknetzes) ermöglicht die sehr schnelle Übertragung von Nachrichten, die für viele Anwendungsfälle, z.B. Gefahrenmeldungen, sehr wichtig ist.

Gemäß der Ausführungsform der vorliegenden Erfindung ist es vorgesehen, dass die initiale Zusatzinformation wenigstens
-- eine Nachrichtenidentifikationsinformation (eindeutige inkrementierte Initial-Nachrichten-ID, die zusammen mit der u.a. Definition des Straßenabschnitts eine eindeutige Gesamt-ID ergibt und nicht verwechselbar ist)),
-- eine eindeutige unverwechselbare Definition des Straßenabschnitts inklusive der Fahrtrichtung und
umfasst, wobei die Zusatzinformation darüber hinaus eine der nachfolgenden Informationen umfassen kann:
-- die Positionsinformation des finalen Empfängers am Abgrenzungspunkt des Straßenabschnittes (das kann zur Erhöhung der Sendestärke an diesem Ende des Straßenabschnitts genutzt werden, damit eine höhere Gewährleistung entsteht, dass die Kettennachrichten auch diesen speziellen Empfänger erreichen),
-- die Wiederholungsinformation.

Gemäß einer Ausführungsform der vorliegenden Erfindung ist es vorgesehen, dass die fahrzeugspezifische Zusatzinformation eines Fahrzeugs die folgenden Informationen umfasst:
-- seine zweidimensionale Position (ggfs. auch seine dreidimensionale Position) auf dem Straßenabschnitt, der in der initialen Nachricht enthalten ist, d.h. des geographischen Gebiets 100. Die Position kann wegen GNSS Fehlern auch leicht neben der Straße sein; jedoch wird dies in der Regel durch das Navigationssystem korrigiert, da vermutet wird, dass sich der betreffende Verkehrsteilnehmer auf dem betreffenden Streckenabschnitt befindet, durch Positionsmatch auf die Straße. Alternativ könnte die vom Navigationssystem korrigierte Position in eine GNSS Position umgerechnet werden und diese als der Parameterwert gelten; das Fahrzeug wird seine fahrzeugspezifischen Zusatzinformationen aber nur dann in einer Broadcast Nachricht versenden, wenn das Navigationssystem (oder eine Funkbake) entschieden hat, dass es sich auf dem Straßenabschnitt befindet),
-- seine Geschwindigkeit,
-- den aktuellen Zeitstempel,
-- den Fahrzeugtyp (z.B. PKW oder LKW oder sogar welche weitere Differenzierung wie PKW-Sportwagen oder langsamer LKW mit Anhänger).

Die fahrzeugspezifische Zusatzinformation kann darüber hinaus auch die nachfolgende Informationen umfassen: die maximal mögliche Geschwindigkeit.

Der betrachtete Verkehrsteilnehmer (bzw. Empfänger der Broadcast-Nachricht) entscheidet:
-- anhand der eigenen aktuellen Positions-, Geschwindigkeits- und Fahrtrichtungsüberprüfung, ob der Nachrichteninhalt der empfangenen Broadcast-Nachricht durch ihn mit Zusatzinformationen anzureichern ist und/oder
-- anhand seiner aktuellen Route als Verkehrsflussinformation auszuwerten ist,
wobei wenigstens ein Teil der Empfänger jeweils weitere Broadcast-Nachrichten senden, sofern dieses durch einen Algorithmus zur Auswertung aller von ihm bereits erhaltenen Broadcast Nachrichten und aller von ihm bereits gesendeten Broadcast Nachrichten zu diesem Straßenabschnitt (und dieser Initial-Nachrichten-ID) und zeitlichen Schwellwerten bestimmt worden ist.

Im Folgenden wird beschrieben, wie die Anzahl der gesendeten Broadcast Nachrichten erfindungsgemäß minimiert werden kann und trotzdem das Ziel erreicht wird, dass prozentmäßig ausreichend viele am Verfahren teilnehmende Fahrzeuge (d.h. teilnehmend bzgl. Broadcast Kommunikation, Lokalisierung in einem Straßenkartensystem, 2D Position, optional Distanzfortschritt auf dem Straßenabschnitt, aktuelle Geschwindigkeit und Fahrtrichtung, Zeitmarke) auf dem Straßenabschnitt innerhalb einer sehr kurzen Zeitspanne nach dem Versenden der initialen Nachricht mit ihren Basis Verkehrsinformationen erfasst werden. Die erfindungsgemäßen Regeln bzgl. des Versendens einer anzureichernden Broadcast Nachricht werden beispielhaft speziell wie folgt angegeben:
-- Regel 1: ein Fahrzeug darf innerhalb einer bestimmten Zeitspanne dt (dt beispielsweise per Grundkonfiguration auf dt = 1 Sekunde eingestellt) bzw. Aggregationszeitinformation, nur eine Broadcast Nachricht aussenden, die Anreicherungen seiner Positionsinformation, Geschwindigkeitsinformation, momentaner Zeitstempelinformation sowie Zusatzinformation enthält.,
-- Regel 2: ein Fahrzeug darf zu einer Initial-Nachrichten-ID per Grundkonfigurationswert nur maximal eine feste Anzahl (Wiederholungsinformation) an Broadcast Nachricht aussenden. Insbesondere ist diese Anzahl ausreichend hoch zu wählen, wenn die Anzahl der Fahrzeuge auf dem Gesamtabschnitt möglichst gut als absoluter Wert bestimmt werden soll.
   Der Parameter der Wiederholungsinformation kann auch von der Fahrzeugdichte abhängig gemacht werden.
-- Regel 3: ein Fahrzeug darf zu einer alten Initial-Nachrichten-ID keine Anreicherung vornehmen und keine Broadcast Nachricht dazu aussenden, sofern es erkennt, dass es eine neuere Initial-Nachrichten-ID gibt, was durch den Empfang einer diesbezüglichen Nachricht möglich ist oder aufgrund eines bekannten Zeitfortschritts zur periodischen Aussendung oder eines bekannten anderen Zeitschemas zur Wiederholung von initialen Nachrichten möglich ist,
-- Regel 4: ein Fahrzeug muss nach Erhalt einer Nachricht immer eine fest vorgegebene Zeit, dt, bzw. Aggregationszeitinformation warten bis es eine angereicherte Broadcast Nachricht versendet,
-- Regel 5: sobald ein Fahrzeug die erste Broadcast Nachricht mit einer neuen Initial-Nachrichten-ID dekodiert hat, wird von ihm sein Datensatz (Position, Geschwindigkeit, Zeitstempel) erhoben und im Fahrzeug abgespeichert als statischer Triplet Datensatz,
-- Regel 6: ein Fahrzeug speichert immer die zuletzt von ihm gesendete Broadcast Nachricht und löscht danach die vorherige abgespeicherte versendete Nachricht,
-- Regel 7: ein Fahrzeug wird eine neu empfangene Broadcast Nachricht mit seinen eigenen Daten (Position, Geschwindigkeit, Zeitstempel) sowie den weiteren Parametern anreichern und in einem zusätzlichen Block noch nicht enthaltene Basis Informationen aus seiner zuletzt von ihm versendeten Broadcast Nachricht anreichern und alle innerhalb von dt insgesamt empfangenen neuen Broadcast Nachrichten ebenfalls zur Anreicherung seiner zu versendenden Broadcast Nachricht verwenden, wobei eine Redundanz in allen Schritten vermieden wird und dieses durch Abgleich aller Positions-Geschwindigkeits- und Zeitstempeldaten möglich ist, da alle Datensätze einer zu versendenden Broadcast Nachricht nur unterschiedliche Triplets enthalten dürfen, da ansonsten zu viele Fahrzeuge gezählt würden und damit die Gewichtung der dazugehörigen identischen Geschwindigkeiten im späteren Auswertungsschritt zu hoch erfolgen würde,
-- Regel 8: ein Fahrzeug muss vor dem Anreichern anhand seiner eigenen Daten (insbesondere Position, Geschwindigkeit, Zeitstempel) prüfen, ob es langsam auf dem Standstreifen oder in einer Parkbucht fährt oder steht und dieses nicht dem Verkehrsgeschehen um das Fahrzeug herum geschuldet ist (sofern dieses aber nicht eindeutig und zweifelsfrei bestimmt werden kann, so können diese verfälschenden Daten auch später mit mehr Kenntnis über die Verkehrssituation der näheren Umgebung erkannt werden und als Ausreißer aussortiert werden, die den allgemeinen Verkehrsfluss nicht repräsentieren) somit kann ein solches Fahrzeug mehrere unterschiedliche Nachrichten empfangen und ausdünnen, aber bei der Versendung der angereicherten Nachricht die Anreicherung ohne sein eigenes Datentriplet Datensatzpaket durchführen (es wird somit als spezielle "Relay" Station trotzdem genutzt werden, um damit auch eine 400m Lücke schließen zu können).

Erfindungsgemäß ist es bevorzugt vorgesehen, dass aufgrund der Art der Daten in den Broadcast Nachrichten nicht auf ein individuelles Fahrzeug zurückgeschlossen werden kann, da zwar seine Position zu einem gegebenen Zeitpunkt übertragen wird, aber zwischen zweien seiner Positionen kein Bezug hergestellt werden kann (da jede seiner Positionen jeweils in einer Nachricht mit unterschiedlicher Initial-Nachrichten-ID vorliegen wird) und somit auch keine Positionen-Perlenkette (Positionen einer Spur) für ein und dasselbe Fahrzeug rekonstruiert werden kann. Da auch über die Broadcast Nachrichten keine eindeutige Identität Preisgegeben wird, ist die Anonymität jeden einzelnen Fahrzeuges und seiner Triplet Information gewährleistet. Die jeweilige Zusatzinformation (nach dem Triple) sind nicht ausreichend differenziert, um eindeutige Zusammenhänge herstellen zu können. Die einzige Situation aus der man Zusammenhänge zwischen Daten mit unterschiedlichen Initial-Nachrichten-IDs herstellen könnte entsteht, wenn mehrere initiale Nachrichten mit einer extrem hohen Frequenz versendet werden, so dass aus Positionen und Geschwindigkeiten längere Teil-Spuren eindeutig rekonstruiert werden können. Das kann aber über die Frequenz (z.B. Abstand >2 Minuten) der initialen Nachrichten (des Senders 20) eindeutig vermieden werden ohne die Vorteile der Erfindung zu beschränken. Darüber hinaus soll auch die Anzahl der Broadcast Nachrichten pro Tag möglichst reduziert werden. Die Anforderung der Anonymität steht auch nicht im Widerspruch dazu, dass die Zusatzinformation ggf. eine das jeweilige Fahrzeug identifizierende, insbesondere das Fahrzeug pseudonym identifizierende, Information umfasst; eine solche pseudonyme Identifikation könnte vorteilhafterweise zur Vermeidung von Fahrzeug-Doppelzählungen verwendet werden. Erfindungsgemäß weist die wenigstens eine Broadcast-Nachricht des Senders 20 die genannten Parameter der Wiederholungsinformation und der Aggregationszeitinformation auf.

Durch das erfindungsgemäße Verfahren ist es in vorteilhafter Weise auch möglich, die Anzahl an Fahrzeugen auf dem betrachteten Straßenabschnitt im Durchlauf einer initialen Broadcast Nachricht bis zum finalen Empfänger 25 am Ende des Straßenabschnitts zu ermitteln. Das Verfahren der Erfindung kann also auch für Zählungen der unterschiedlichen Fahrzeuge, die einen bestimmten Straßenabschnitt passieren, genutzt werden.

Falls die Zusatzinformation gemäß einer betrachteten Ausführungsform der Erfindung eine Fahrzeugtypinformation und eine Information zur maximalen Geschwindigkeit des Fahrzeugs umfasst, so können über die nach diesen 2 Zusatzparametern differenzierteren Zählungen z.B. die mittleren Durchschnittsgeschwindigkeiten für verschiedene Fahrzeugtypen ermittelt werden (PKW vs. Lastwagen; schneller PKW vs. langsamer PKW) was bzgl. der schnellen PKWs etwas über die freie Befahrung der Überholspur oder der Disziplin der langsameren Fahrzeuge möglichst lange rechts zu fahren aussagt. Andere Aussagen wie z.B. die generelle Einhaltung von maximal erlaubten Geschwindigkeiten z.B. für Abschnitte mit größeren negativen Steigungen könnten für schwere LKWs ebenfalls durch die mittlere Geschwindigkeit auf Abschnitten für eine Gruppe dieser LKWs abgelesen werden.

Um zu große Lücken (z.B. größer als Senderadius r=400m) zwischen Sendern und dem abstandsmäßig nächsten Empfänger zu vermeiden, sollte ein Straßenabschnitt in der initialen Broadcast Nachricht nicht zu lang sein, d.h. die initialen Sendestationen (die jeweiligen Sender 20) und entsprechend auch finalen Empfangsstationen 25 sind dichter entlang einer Straßenführung zu wählen.

Erfindungsgemäß ist es ferner bevorzugt vorgesehen, dass der Nachrichteninhalt der wenigstens einen Broadcast-Nachricht (d.h. der initialen Broadcast-Nachricht des Senders 20) wenigstens eine der nachfolgenden Informationen umfasst:
-- Verkehrsflussinformationen betreffend wenigstens ein weiteres geographisches Gebiet, insbesondere ein Abschnitt, insbesondere ein Streckenabschnitt, eines Verkehrsweges, insbesondere einer Straße, welcher in Fahrtrichtung der Verkehrsteilnehmer dem geographischen Gebiet 100 nachfolgt,
-- Verkehrsflussinformationen betreffend mehrere alternativ benutzbare Wege welche in Fahrtrichtung der Verkehrsteilnehmer dem geographischen Gebiet 100 nachfolgen. Somit ist es erfindungsgemäß vorteilhaft möglich, dass auch V2X-Verkehrsflussdaten durch Broadcast-Nachrichten-Ketten in verzweigten Straßensystemen übertragen und nutzbar gemacht werden, so dass Nachteile wie folgt vermieden werden können: Verkehrsinformationssysteme für ein verzweigtes Straßennetz sind kostenintensiv, nur bedingt mit den aktuellsten Verkehrsinformationen (V-Infos) versehen, die V-Infos liegen nicht lückenlos für alle Teilstrecken einer Route vor, nutzen spezielle Kommunikationssysteme die auf spezieller Infrastruktur basieren.

Es ist hierdurch erfindungsgemäß vorteilhaft möglich, dass einem Verkehrsteilnehmer (nachfolgend auch als FZG bezeichnet) in einem Straßennetzsystem (z.B. hier exemplarisch immer als Bundes-Autobahn-System, BAB-System, genannt) die aktuellsten Verkehrsinformationen (V-Info) auf seinen möglichen Routen auf dem Straßennetzsystem geliefert wird, ohne dass infrastruktur-bedingende Kommunikationssysteme wie z.B. ein zellulares Mobilfunksystem genutzt wird und ohne, dass eine Kommunikations-Adresse des FZGs bekannt sein muss (d.h. es wird die strikte Einhaltung von Datenschutzbestimmungen (insbesondere die privacy) vorgesehen).

Diese V-Info können z.B. von anderen Verkehrsteilnehmern erhobene/gemessene Basisdaten sein.

Das FZG mit V-Info Bedarf muss lediglich Broadcast Nachrichten mit V-Info Daten empfangen können und es muss mindestens die aktuell befahrene Straße, seine eigene Position sowie die Fahrtrichtung auf der Straße bestimmen können, um die für das FZG relevanten Daten aus den V-Info Daten identifizieren zu können. Damit kann das FZG V-Info Daten nutzen.

Damit das FZG mit V-Info Bedarf auch anderen FZGen auf der BAB bei dem Erhalt solcher V-Info Nachrichten bzgl. des Nachrichten Inhaltes und dem Erhalt solcher Nachrichten dienen kann, wird das FZG auch Broadcast Nachrichten versenden können müssen und dazu die vorher erhaltene Nachricht (oder Nachrichten) mit eigenen V-Info Daten anreichern und als Broadcast Nachricht weiterleiten können. Hierzu muss es zusätzlich auch seine eigenen V-Info Basisdaten wie z.B. die eigene Geschwindigkeit und die Zeit bestimmen können.

Da das FZG sich in einem Straßennetz befindet ist das FZG an einer V-Info interessiert, die ihm möglichst alle unterschiedlichen zukünftigen Verzweigungen mit V-Infos abdeckt. Das FZG ist an aktuellsten V-Infos bzgl. seiner Fahrtrichtung, seiner aktuell genutzten Route und sogar möglicher alternativer Routen interessiert. Um dieses zu ermöglichen benötigten wir die Definition der V-Info Basisdaten eines Abschnittes und die Grundmechanismen, die u.a. das Sammeln, Speichern, Anreichern von V-Info Daten betreffen, die in "Erfindungsmeldung_V2X-Verkehrsflussdaten - Broadcast-Nachrichten-Ketten entgegen Verkehrsrichtung" beschrieben sind.

Zur Wahl der richtigen Streckenführung auf einer BAB interessiert das FZG vor jeder BAB Kreuzungsstelle (Abfahrt, Y-Verzweigung, BAB-Kreuz) wie dort die aktuelle Verkehrssituation ist. Je näher die Kreuzung auf seiner aktuellen Route zu seinem Ziel zu dem FZG ist, umso dringlicher ist es diese Information über die Verkehrssituation als möglichst aktuelle Information zu erhalten.

Die aus dem Stand der Technik bekannten Verkehrsinformationssysteme können diese hohe Aktualität nicht liefern.

Erfindungsgemäß ist es vorteilhaft insbesondere möglich, diese V-Info eines Straßennetzes mit einer Aktualität, je nach Setup, im unteren Sekunden- bis Minutenbereich, zu liefern. Ferner wird das Verkehrsinformationssystem dem FZG nur die V-Info Daten für seine aktuelle Fahrtrichtung und seine möglichen Verzweigungen liefern und damit den Datentransfer minimieren.

Das FZG wird für die nächsten möglichen Verzweigungen (auch für Teilstrecken ohne Verzweigung), auf einer Autobahn, alle V-Infos für seine Fahrtrichtung erhalten. Ab jeder Verzweigung werden die zukünftigen möglichen Straßenabschnitte und deren weiteren Verzweigungen mit deren abschnittsspezifischen V-Info Daten ebenfalls in der vom FZG (mit V-info Bedarf) erhaltenen "Straßennetz" V-Info Broadcast Nachricht enthalten sein. Anhand dieser empfangenen "Straßennetz" V-Info Broadcast Nachricht kann das FZG dann entscheiden, welchen Weg es nehmen soll (bisherige Route beibehalten oder neue Route wählen oder eine erste Route einer initialen Routenanfrage auszuwählen). Der Router, der diese Entscheidung trifft, kann on-board im FZG vorliegen, wodurch Kommunikationen zu off-board Routern eingespart werden.

Die im FZG auf dem BAB Straßennetz erhaltene V-Info Broadcast Nachricht wird also für die Routen auf dem BAB Netz alle V-Info Informationen der Teilstrecken der BAB enthalten.

## Patentansprüche

1. Verfahren zur Erfassung einer Verkehrssituation in einem geographischen Gebiet (100) durch Übermitteln eines Nachrichteninhalts von einem stationären Sender (20) zu einem stationären Empfänger (25) über eine von einer Mehrzahl von mobilen Verkehrsteilnehmern (21, 22, 23, 24) gebildete Übertragungskette, wobei sowohl der Sender (20) als auch die Mehrzahl von mobilen Verkehrsteilnehmern (21, 22, 23, 24) Broadcast-Nachrichten mit einem Nachrichteninhalt zu senden in der Lage sind und wobei der stationäre Empfänger (25) in der Lage ist, Broadcast-Nachrichten zu empfangen, wobei der Nachrichteninhalt wenigstens einer Broadcast-Nachricht des Senders (20) an wenigstens einen der Mehrzahl von mobilen Verkehrsteilnehmern (21, 22, 23, 24) mittels der wenigstens einen Broadcast-Nachricht mittels einer PC5-Sidelink Funktionalität, insbesondere unter Nutzung der Mode-4-Funktionalität, gesendet wird,
wobei das Verfahren zur Erfassung der Verkehrssituation hinsichtlich jedes betrachteten Verkehrsteilnehmers der, von der Mehrzahl von mobilen Verkehrsteilnehmern (21, 22, 23, 24) gebildeten Übertragungskette die nachfolgenden Schritte umfasst:
-- in einem ersten Schritt empfängt der betrachtete Verkehrsteilnehmer wenigstens eine Broadcast-Nachricht, wobei der Nachrichteninhalt der wenigstens einen Broadcast-Nachricht wenigstens
-- eine Nachrichtenidentifikationsinformation,
-- eine Gebietsinformation zur Definition des geographischen Gebiets (100)
-- eine Wiederholungsinformation und
-- eine Aggregationszeitinformation
umfasst,
-- in einem nachfolgenden zweiten Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:
-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation
umfasst,
wobei die Zusatzinformation wenigstens eine der nachfolgenden Informationen umfasst:
-- eine Fahrzeugtypinformation,
-- eine Fahrzeugkategorieinformation,
-- eine Information zur maximalen Geschwindigkeit des Fahrzeugs,
-- eine das Fahrzeug identifizierende Information,
wobei der betrachtete Verkehrsteilnehmer die wenigstens eine weitere Broadcast-Nachricht frühestens nach Ablauf eines Zeitintervalls nach dem im ersten Schritt erfolgenden Empfang der wenigstens einen Broadcast-Nachricht sendet, wobei das Zeitintervall der Aggregationszeitinformation entspricht oder als Teil der Aggregationszeitinformation definiert ist, wobei die Wiederholungsinformation angibt, ob der zweite Schritt wiederholt wird.

2. Verfahren nach Anspruch 1, **dadurch gekennzeichnet, dass** das geographische Gebiet (100) einem Abschnitt, insbesondere einem Streckenabschnitt, eines Verkehrsweges, insbesondere einer Straße, etwa einer Schnellstraße oder Autobahn, entspricht oder das geographische Gebiet (100) den entsprechenden Bereich des Abschnitts des Verkehrsweges definiert,
wobei insbesondere die Gebietsinformation eine Richtungsinformation (101) umfasst und/oder wobei die Gebietsinformation eine Positionsinformation des stationären Empfängers (25) umfasst.

3. Verfahren nach einem der vorhergehenden Ansprüche, **dadurch gekennzeichnet, dass** die Positionsinformation der momentanen Position des betrachteten Verkehrsteilnehmers eine Positionsinformation auf dem Streckenabschnitt des Verkehrsweges ist*.

4. Verfahren nach einem der vorhergehenden Ansprüche, **dadurch gekennzeichnet, dass** der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets (100) erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation sich fortbewegend erkannt wird.

5. Verfahren nach einem der vorhergehenden Ansprüche, **dadurch gekennzeichnet, dass** die durch den betrachteten Verkehrsteilnehmer empfangene wenigstens eine Broadcast-Nachricht
-- eine vom stationären Sender (20) gesendete Broadcast-Nachricht ist oder
-- eine von einem anderen Verkehrsteilnehmer gesendete weitere Broadcast-Nachricht ist,
wobei das Verfahren insbesondere als Teil des zweiten Schritts aufweist:
-- der betrachtete Verkehrsteilnehmer empfängt innerhalb des Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und
-- der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst.

6. Verfahren nach einem der vorhergehenden Ansprüche, **dadurch gekennzeichnet, dass** - in einem dritten Schritt sowie in Abhängigkeit der Wiederholungsinformation - der zweite Schritt durch den betrachteten Verkehrsteilnehmer wiederholt wird, wobei der betrachtete Verkehrsteilnehmer in Wiederholung des zweiten Schritts eine erneute weitere Broadcast-Nachricht frühestens nach Ablauf eines erneuten Zeitintervalls nach der zuvor erfolgten Durchführung des zweiten Schritts sendet, wobei das erneute Zeitintervall der Aggregationszeitinformation entspricht oder als Teil der Aggregationszeitinformation definiert ist, wobei das Verfahren insbesondere als Teil des dritten Schritts aufweist:
-- der betrachtete Verkehrsteilnehmer empfängt innerhalb des erneuten Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und
-- der betrachtete Verkehrsteilnehmer sendet die erneute weitere Broadcast-Nachricht derart, dass die erneute weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des erneuten Zeitintervalls von den zusätzlichen anderen Verkehrsteilnehmern empfangenen zusätzlichen weiteren Broadcast-Nachrichten umfasst,
wobei insbesondere der dritte Schritt in Abhängigkeit der Wiederholungsinformation mehrfach durchgeführt wird.

7. Verfahren nach einem der vorhergehenden Ansprüche, **dadurch gekennzeichnet, dass** der betrachtete Verkehrsteilnehmer bezüglich der weiteren Broadcast-Nachricht und bezüglich der wenigstens einen erneuten weiteren Broadcast-Nachricht die gleiche Ergänzungsinformation verwendet, insbesondere hinsichtlich der Positionsinformation, der Geschwindigkeitsinformation, der Zeitstempelinformation und der Zusatzinformation.

8. Verfahren nach einem der vorhergehenden Ansprüche, **dadurch gekennzeichnet, dass** der Nachrichteninhalt der wenigstens einen Broadcast-Nachricht wenigstens eine der nachfolgenden Informationen umfasst:
-- Verkehrsflussinformationen betreffend wenigstens ein weiteres geographisches Gebiet, insbesondere ein Abschnitt, insbesondere ein Streckenabschnitt, eines Verkehrsweges, insbesondere einer Straße, welcher in Fahrtrichtung der Verkehrsteilnehmer dem geographischen Gebiet (100) nachfolgt,
-- Verkehrsflussinformationen betreffend mehrere alternativ benutzbare Wege welche in Fahrtrichtung der Verkehrsteilnehmer dem geographischen Gebiet (100) nachfolgen.

9. System zur Erfassung einer Verkehrssituation in einem geographischen Gebiet (100) durch Übermitteln eines Nachrichteninhalts von einem stationären Sender (20) zu einem stationären Empfänger (25) über eine von einer Mehrzahl von mobilen Verkehrsteilnehmern (21, 22, 23, 24) gebildete Übertragungskette, wobei das System den stationären Sender (20), den stationären Empfänger (25) und die Mehrzahl von mobilen Verkehrsteilnehmern (21, 22, 23, 24) umfasst, wobei sowohl der Sender (20) als auch die Mehrzahl von mobilen Verkehrsteilnehmern (21, 22, 23, 24) Broadcast-Nachrichten mit einem Nachrichteninhalt zu senden in der Lage sind, wobei der Nachrichteninhalt wenigstens einer Broadcast-Nachricht des Senders (20) an wenigstens einen der Mehrzahl von mobilen Verkehrsteilnehmern (21, 22, 23, 24) mittels der wenigstens einen Broadcast-Nachricht mittels einer PC5-Sidelink Funktionalität, insbesondere unter Nutzung der Mode-4-Funktionalität, gesendet wird,
wobei jeder betrachtete Verkehrsteilnehmer der, von der Mehrzahl von mobilen Verkehrsteilnehmern (21, 22, 23, 24) gebildeten Übertragungskette derart konfiguriert ist, dass:
-- der betrachtete Verkehrsteilnehmer wenigstens eine Broadcast-Nachricht empfängt, wobei der Nachrichteninhalt der wenigstens einen Broadcast-Nachricht wenigstens
-- eine Nachrichtenidentifikationsinformation,
-- eine Gebietsinformation zur Definition des geographischen Gebiets (100)
-- eine Wiederholungsinformation und
-- eine Aggregationszeitinformation
umfasst,
-- der betrachtete Verkehrsteilnehmer wenigstens eine weitere Broadcast-Nachricht sendet, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:
-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation
umfasst,
wobei die Zusatzinformation wenigstens eine der nachfolgenden Informationen umfasst:
-- eine Fahrzeugtypinformation,
-- eine Fahrzeugkategorieinformation,
-- eine Information zur maximalen Geschwindigkeit des Fahrzeugs,
-- eine das Fahrzeug identifizierende Information,
wobei der betrachtete Verkehrsteilnehmer dazu konfiguriert ist, die wenigstens eine weitere Broadcast-Nachricht frühestens nach Ablauf eines Zeitintervalls nach dem im ersten Schritt erfolgenden Empfang der wenigstens einen Broadcast-Nachricht zu senden, wobei das Zeitintervall der Aggregationszeitinformation entspricht oder als Teil der Aggregationszeitinformation definiert ist, wobei die Wiederholungsinformation angibt, ob der zweite Schritt wiederholt wird.

10. Verkehrsteilnehmer zur Verwendung in einem System nach Anspruch 9.

11. Computerprogramm umfassend Befehle, mit deren Hilfe die Schritte eines Verfahrens nach einem der Ansprüche 1 bis 8 durchführbar sind, wenn das Computerprogramm auf einer programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24), ausgeführt wird.

12. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf der programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24) auszuführenden Teil des Computerprogramms nach Anspruch 11 speichert oder überträgt.

## Claims

1. Method for detecting a traffic situation in a geographical region (100) by conveying a message content from a stationary transmitter (20) to a stationary receiver (25) via a transmission chain formed by a plurality of mobile traffic participants (21, 22, 22, 23, 24), both the transmitter (20) and the plurality of mobile traffic participants (21, 22, 23, 24) being capable of transmitting broadcast message comprising a message content, and the stationary receiver (25) being capable of receiving broadcast messages, the message content of at least one broadcast message of the transmitter (20) being transmitted to at least one of the plurality of mobile traffic participants (21, 22, 23, 24) by means of the at least one broadcast message by means of a PC5 sidelink functionality, in particular using mode 4 functionality,
wherein the method for detecting the traffic situation comprises, for each relevant traffic participant of the transmission chain formed by the plurality of mobile traffic participants (21, 22, 23, 24), the following steps:
- in a first step, the relevant traffic participant receives at least one broadcast message, the message content of the at least one broadcast message comprising at least
- message identification information,
- region information for defining the geographical region (100),
- repetition information, and
- aggregation time information,
- in a following second step, the relevant traffic participant transmits at least one further broadcast message, the at least one further broadcast message comprising, as its message content, the message content of the received at least one broadcast message and at least one supplementary piece of information, the supplementary information comprising at least:
- position information for the current position of the relevant traffic participant,
- speed information for the relevant traffic participant,
- current timestamp information, and
- additional information,
the additional information comprising at least one of the following pieces of information:
- vehicle type information,
- vehicle category information,
- information on the maximum speed of the vehicle,
- information identifying the vehicle,
the relevant traffic participant transmitting the at least one further broadcast message, at the earliest, after the expiration of a time interval after the at least one broadcast message is received in the first step, the time interval corresponding to the aggregation time information or being defined as part of the aggregation time information, the repetition information specifying whether the second step is repeated.

2. Method according to claim 1, **characterised in that** the geographical region (100) corresponds to a portion, in particular a route segment, of a traffic route, in particular of a street such as a motorway or highway, or the geographical region (100) defines the corresponding region of the portion of the traffic route,
in particular the region information comprising direction information (101) and/or the region information comprising position information of the stationary receiver (25).

3. Method according to either of the preceding claims, **characterised in that** the position information for the current position of the relevant traffic participant is position information on the route segment of the traffic route.

4. Method according to any of the preceding claims, **characterised in that** the relevant traffic participant transmits the at least one further broadcast message only when the current or most recently determined position of the relevant traffic participant is detected by position determination means of the relevant traffic participant as being within the geographical region (100) or when the relevant traffic participant is detected by the position determination means as being located on the portion of the traffic route and/or as moving along on the portion of the traffic route in direction or in accordance with the direction information.

5. Method according to any of the preceding claims, **characterised in that** the at least one broadcast message received by the relevant traffic participant
- is a broadcast message transmitted by the stationary transmitter (20) or
- is a further broadcast message transmitted by another traffic participant,
the method in particular including, as part of the second step:
- the relevant traffic participant receiving, within the time interval, additional further broadcast messages from additional other traffic participants, the additional further broadcast messages comprising associated additional supplementary information, as well as their associated message identification information, region information, repetition information and aggregation time information, and
- the relevant traffic participant transmitting the at least one further broadcast message in such a way that the at least one further broadcast message comprises, as its message content, the message content of the at least one broadcast message and comprises, as part of its supplementary information, the additional supplementary information of the additional further broadcast messages received from the additional other traffic participants within the time interval.

6. Method according to any of the preceding claims, **characterised in that**, in a third step and as a function of the repetition information, the second step is repeated by the relevant traffic participant, the relevant traffic participant, in repeating the second step, transmitting a fresh further broadcast message, at the earliest, after the expiration of a fresh time interval after the previous performance of the second step, the fresh time interval corresponding to the aggregation time information or being defined as part of the aggregation time information, the method including, in particular as part of the third step:
- the relevant traffic participant receiving, within the fresh time interval, additional further broadcast messages from additional other traffic participants, the additional further broadcast messages comprising associated additional supplementary information, as well as their associated message identification information, region information, repetition information and aggregation time information, and
- the relevant traffic participant transmitting the fresh further broadcast message in such a way that the fresh further broadcast message comprises, as its message content, the message content of the at least one broadcast message and comprises, as part of its supplementary information, the additional supplementary information of the additional further broadcast messages received from the additional other traffic participants within the time interval,
in particular the third step being performed repeatedly as a function of the repetition information.

7. Method according to the preceding claims, **characterised in that** the relevant traffic participant uses the same supplementary information for the further broadcast message and for the at least one fresh further broadcast message, in particular as regards the position information, the speed information, the timestamp information and the additional information.

8. Method according to any of the preceding claims, **characterised in that** the message content of the at least one broadcast message comprises at least one of the following pieces of information:
- traffic flow information relating to at least one further geographical region, in particular to a portion, in particular a route segment, of a traffic route, in particular of a street, which follows on from the geographic region (100) in the direction of travel of the traffic participant,
- traffic flow information relating to a plurality of alternatively useable routes which follow on from the geographical region (100) in the direction of travel of the traffic participant.

9. System for detecting a traffic situation in a geographical region (100) by conveying a message content from a stationary transmitter (20) to a stationary receiver (25) via a transmission chain formed by a plurality of mobile traffic participants (21, 22, 22, 23, 24), the system comprising the stationary transmitter (20), the stationary receiver (25) and the plurality of mobile traffic participants (21, 22, 23, 24), both the transmitter (20) and the plurality of mobile traffic participants (21, 22, 23, 24) being capable of transmitting broadcast message comprising a message content, the message content of at least one broadcast message of the transmitter (20) being transmitted to at least one of the plurality of mobile traffic participants (21, 22, 23, 24) by means of the at least one broadcast message by means of a PC5 sidelink functionality, in particular using mode 4 functionality, wherein each relevant traffic participant of the transmission chain formed by the plurality of mobile traffic participants (21, 22, 23, 24) is configured in such a way that:
- the relevant traffic participant receives at least one broadcast message, the message content of the at least one broadcast message comprising
- message identification information,
- region information for defining the geographical region (100),
- repetition information, and
- aggregation time information,
- the relevant traffic participant transmits at least one further broadcast message, the at least one further broadcast message comprising, as its message content, the message content of the received at least one broadcast message and at least one supplementary piece of information, the supplementary information comprising at least:
- position information for the current position of the relevant traffic participant,
- speed information for the relevant traffic participant,
- current timestamp information, and
- additional information,
the additional information comprising at least one of the following pieces of information:
- vehicle type information,
- vehicle category information,
- information on the maximum speed of the vehicle,
- information identifying the vehicle,
the relevant traffic participant being configured to transmit the at least one further broadcast message, at the earliest, after the expiration of a time interval after the at least one broadcast message is received in the first step, the time interval corresponding to the aggregation time information or being defined as part of the aggregation time information, the repetition information specifying whether the second step is repeated.

10. Traffic participant for use in a system according to claim 9.

11. Computer program comprising commands by way of which the steps of a method according to any of claims 1 to 8 can be carried out when the computer program is run on a programmable device, in particular on a network node in the form of a stationary transmitter (20) and/or stationary receiver (25) and/or mobile traffic participant (20, 21, 22, 23, 24).

12. Computer-readable medium provided for storing a computer program or data carrier signal provided for transmitting a computer program, the computer-readable medium or data carrier signal storing or transmitting the computer program according to claim 11, or the computer-readable medium or data carrier signal storing or transmitting the part of the computer program according to claim 11 which is to be carried out on the programmable device, in particular on a network node in the form of a stationary transmitter (20) and/or stationary receiver (25) and/or mobile traffic participant (20, 21, 22, 23, 24).

## Revendications

1. Procédé de détection d'une situation de trafic dans une zone géographique (100) par transmission d'un contenu de message d'un émetteur stationnaire (20) à un récepteur stationnaire (25) par l'intermédiaire d'une chaîne de transmission formée par une pluralité d'usagers de la route mobiles (21, 22, 23, 24), aussi bien l'émetteur (20) que la pluralité d'usagers de la route mobiles (21, 22, 23, 24) étant en mesure d'envoyer des messages de diffusion avec un contenu de message et le récepteur stationnaire (25) étant en mesure de recevoir des messages de diffusion, le contenu de message d'au moins un message de diffusion de l'émetteur (20) étant envoyé à au moins l'un de la pluralité d'usagers de la route mobiles (21, 22, 23, 24) au moyen dudit au moins un message de diffusion au moyen d'une fonctionnalité Sidelink PC5, en particulier en utilisant la fonctionnalité mode 4,
le procédé de détection de la situation de trafic concernant chaque usager de la route considéré de la chaîne de transmission formée par la pluralité d'usagers de la route mobiles (21, 22, 23, 24) comprenant les étapes suivantes :
- dans une première étape, l'usager de la route considéré reçoit au moins un message de diffusion, le contenu de message dudit au moins un message de diffusion comprenant au moins :
- une information d'identification de message,
- une information de zone pour la définition de la zone géographique (100),
- une information de répétition, et
- une information de temps d'agrégation
- dans une deuxième étape suivante, l'usager de la route considéré envoie au moins un autre message de diffusion, ledit au moins un autre message de diffusion comprenant comme contenu de message le contenu de message dudit au moins un message de diffusion reçu et au moins une information complémentaire, l'information complémentaire comprenant au moins :
- une information de position de la position instantanée de l'usager de la route considéré,
- une information de vitesse de l'usager de la route considéré,
- une information d'horodatage instantanée, et
- une information supplémentaire,
l'information supplémentaire comprenant au moins une des informations suivantes :
- une information de type de véhicule,
- une information de catégorie de véhicule,
- une information sur la vitesse maximale du véhicule,
- une information identifiant le véhicule,
l'usager de la route considéré envoyant ledit au moins un autre message de diffusion au plus tôt à l'expiration d'un intervalle de temps suivant la réception dudit au moins un message de diffusion effectuée dans la première étape, l'intervalle de temps correspondant à l'information de temps d'agrégation ou étant défini comme faisant partie de l'information de temps d'agrégation, l'information de répétition indiquant si la deuxième étape est répétée.

2. Procédé selon la revendication 1, **caractérisé en ce que** la zone géographique (100) correspond à un tronçon, en particulier un tronçon de parcours, d'une voie de circulation, en particulier une route, telle qu'une voie rapide ou une autoroute, ou la zone géographique (100) définit la zone correspondante du tronçon de la voie de circulation,
dans lequel, en particulier, l'information de zone comprend une information de direction (101) et/ou dans lequel l'information de zone comprend une information de position du récepteur stationnaire (25).

3. Procédé selon l'une des revendications précédentes, **caractérisé en ce que** l'information de position de la position instantanée de l'usager de la route considéré est une information de position sur le tronçon de parcours de la voie de circulation*.

4. Procédé selon l'une des revendications précédentes, **caractérisé en ce que** l'usager de la route considéré envoie ledit au moins un autre message de diffusion uniquement si la position instantanée ou la dernière position déterminée de l'usager de la route considéré est reconnue par des moyens de détermination de position de l'usager de la route considéré comme étant à l'intérieur de la zone géographique (100) ou si l'usager de la route considéré est reconnu par les moyens de détermination de position comme étant sur le tronçon de la voie de circulation et/ou est reconnu comme se déplaçant sur le tronçon de la voie de circulation dans la direction ou conformément à l'information de direction.

5. Procédé selon l'une des revendications précédentes, **caractérisé en ce que** ledit au moins un message de diffusion reçu par l'usager de la route considéré
- est un message de diffusion envoyé par l'émetteur stationnaire (20), ou
- est un autre message de diffusion envoyé par un autre usager de la route,
le procédé présentant en particulier comme partie de la deuxième étape :
- l'usager de la route considéré reçoit, pendant l'intervalle de temps, d'autres messages de diffusion supplémentaires d'autres usagers de la route supplémentaires, les autres messages de diffusion supplémentaires présentant, outre leurs information d'identification de message, information de zone, information de répétition et information de temps d'agrégation respectives, des informations complémentaires supplémentaires respectives, et
- l'usager de la route considéré envoie ledit au moins un autre message de diffusion de telle sorte que ledit au moins un autre message de diffusion comprend comme contenu de message le contenu de message dudit au moins un message de diffusion et comprend comme partie de ses informations complémentaires les informations complémentaires supplémentaires des autres messages de diffusion supplémentaires reçus des autres usagers de la route supplémentaires pendant l'intervalle de temps.

6. Procédé selon l'une des revendications précédentes, **caractérisé en ce que** - dans une troisième étape ainsi qu'en fonction de l'information de répétition - la deuxième étape est répétée par l'usager de la route considéré, l'usager de la route considéré envoyant, en répétition de la deuxième étape, un nouvel autre message de diffusion au plus tôt à l'expiration d'un nouvel intervalle de temps après l'exécution précédemment effectuée de la deuxième étape, le nouvel intervalle de temps correspondant à l'information de temps d'agrégation ou étant défini comme faisant partie de l'information de temps d'agrégation, le procédé comprenant en particulier comme partie de la troisième étape :
- l'usager de la route considéré reçoit, pendant le nouvel intervalle de temps, d'autres messages de diffusion supplémentaires d'autres usagers de la route supplémentaires, les autres messages de diffusion supplémentaires présentant, outre leurs information d'identification de message, information de zone, information de répétition et information de temps d'agrégation respectives, des informations complémentaires supplémentaires respectives, et
- l'usager de la route considéré envoie le nouvel autre message de diffusion de telle sorte que le nouvel autre message de diffusion comprend comme contenu de message le contenu de message dudit au moins un message de diffusion et comprend comme partie de ses informations complémentaires les informations complémentaires supplémentaires des autres messages de diffusion supplémentaires reçus des autres usagers de la route supplémentaires pendant le nouvel intervalle de temps,
dans lequel, en particulier, la troisième étape est exécutée plusieurs fois en fonction de l'information de répétition.

7. Procédé selon l'une des revendications précédentes, **caractérisé en ce que** l'usager de la route considéré utilise la même information complémentaire en ce qui concerne l'autre message de diffusion et en ce qui concerne ledit au moins un nouvel autre message de diffusion, en particulier pour ce qui est de l'information de position, de l'information de vitesse, de l'information d'horodatage et de l'information supplémentaire.

8. Procédé selon l'une des revendications précédentes, **caractérisé en ce que** le contenu de message dudit au moins un message de diffusion comprend au moins l'une des informations suivantes :
- des informations de flux de trafic concernant au moins une autre zone géographique, en particulier un tronçon, en particulier un tronçon de parcours, d'une voie de circulation, en particulier d'une route, qui suit la zone géographique (100) dans le sens de circulation des usagers de la route,
- des informations de flux de trafic concernant plusieurs voies utilisables en alternative qui suivent la zone géographique (100) dans le sens de la circulation des usagers de la route.

9. Système de détection d'une situation de trafic dans une zone géographique (100) par transmission d'un contenu de message d'un émetteur stationnaire (20) à un récepteur stationnaire (25) par l'intermédiaire d'une chaîne de transmission formée par une pluralité d'usagers de la route mobiles (21, 22, 23, 24), le système comprenant l'émetteur stationnaire (20), le récepteur stationnaire (25) et la pluralité d'usagers de la route mobiles (21, 22, 23, 24), aussi bien l'émetteur (20) que la pluralité d'usagers de la route mobiles (21, 22, 23, 24) étant en mesure d'envoyer des messages de diffusion avec un contenu de message et le récepteur stationnaire (25) étant en mesure de recevoir des messages de diffusion, le contenu de message d'au moins un message de diffusion de l'émetteur (20) étant envoyé à au moins l'un de la pluralité d'usagers de la route mobiles (21, 22, 23, 24) au moyen dudit au moins un message de diffusion au moyen d'une fonctionnalité Sidelink PC5, en particulier en utilisant la fonctionnalité mode 4,
chaque usager de la route considéré de la chaîne de transmission formée par la pluralité d'usagers de la route mobiles (21, 22, 23, 24) étant configuré de telle sorte que :
- l'usager de la route considéré reçoit au moins un message de diffusion, le contenu de message dudit au moins un message de diffusion comprenant au moins :
- une information d'identification de message,
- une information de zone pour la définition de la zone géographique (100),
- une information de répétition, et
- une information de temps d'agrégation
- l'usager de la route considéré envoie au moins un autre message de diffusion, ledit au moins un autre message de diffusion comprenant comme contenu de message le contenu de message dudit au moins un message de diffusion reçu et au moins une information complémentaire, l'information complémentaire comprenant au moins :
- une information de position de la position instantanée de l'usager de la route considéré, une information de vitesse de l'usager de la route considéré,
- une information d'horodatage instantanée, et
-- une information supplémentaire,
l'information supplémentaire comprenant au moins une des informations suivantes :
- une information de type de véhicule,
- une information de catégorie de véhicule,
-- une information sur la vitesse maximale du véhicule,
- une information identifiant le véhicule,
l'usager de la route considéré étant configuré pour envoyer ledit au moins un autre message de diffusion au plus tôt à l'expiration d'un intervalle de temps suivant la réception dudit au moins un message de diffusion effectuée dans la première étape, l'intervalle de temps correspondant à l'information de temps d'agrégation ou étant défini comme faisant partie de l'information de temps d'agrégation, l'information de répétition indiquant si la deuxième étape est répétée.

10. Usager de la route destiné à être utilisé dans un système selon la revendication 9.

11. Programme d'ordinateur comprenant des instructions à l'aide desquelles les étapes d'un procédé selon l'une des revendications 1 à 8 peuvent être mises en œuvre lorsque le programme d'ordinateur est exécuté sur un dispositif programmable, en particulier sur un noeud de réseau sous la forme d'un émetteur stationnaire (20) et/ou d'un récepteur stationnaire (25) et/ou d'un usager de la route mobile (21, 22, 23, 24).

12. Support lisible par ordinateur, prévu pour stocker un programme d'ordinateur, ou signal de support de données, prévu pour transmettre un programme d'ordinateur, le support lisible par ordinateur ou le signal de support de données stockant ou transmettant le programme d'ordinateur selon la revendication 11, ou le support lisible par ordinateur ou le signal de support de données stockant ou transmettant la partie du programme d'ordinateur selon la revendication 11 à exécuter sur le dispositif programmable, en particulier sur un noeud de réseau sous la forme d'un émetteur stationnaire (20) et/ou d'un récepteur stationnaire (25) et/ou d'un usager de la route mobile (21, 22, 23, 24) .
